# EUROPEAN PATENT APPLICATION

(11) **EP 4 404 420 A1**
(43) Date of publication of application: **24.07.2024**
(21) Application number: 22921743.5
(22) Date of filing: 27.12.2022
(51) Int. Cl.: H02J 7/00, H02J 50/40, H02J 50/12, H02J 50/70

(54) **TRANSMITTING END FOR WIRELESS CHARGING, CHARGING BASE, AND SYSTEM**

(30) Priority: 20.01.2022 CN 202210065718
(71) Applicant: Honor Device Co., Ltd., Shenzhen, Guangdong 518040 (CN)
(72) Inventor: ZHANG, Tongkai, Shenzhen, Guangdong 518040 (CN); LIU, Wencheng, Shenzhen, Guangdong 518040 (CN); LEI, Fenxing, Shenzhen, Guangdong 518040 (CN)
(74) Representative: Epping - Hermann - Fischer
(86) International application number: PCT/CN2022/142495
(87) International publication number: WO 2023/138322

(57) **Abstract**

This application provides a wireless charging transmitting terminal, charging base, and system, and relates to the field of terminal technologies. The transmitting terminal includes an inverter circuit, n transmitting coils, a suppression circuit, and a controller, where n is an integer greater than or equal to 2; each of the n transmitting coils is connected to an output terminal of the inverter circuit; the inverter circuit is configured to convert a direct current into an alternating current and transmit the alternating current to at least one of the n transmitting coils, the at least one of the n transmitting coils works, and a remaining transmitting coil does not work; and the controller is configured to ground the non-working transmitting coil through the suppression circuit, to suppress a conducted emission and a radiated emission of the non-working transmitting coil. To be specific, the conducted emission and the radiated emission of the non-working transmitting coil are transferred to the ground, to reduce the conducted emission and the radiated emission generated by the non-working transmitting coil, thereby overall suppressing an interfering signal generated by the transmitting terminal.

## Description

This application claims priority to Chinese Patent Application No. 202210065718.3, filed with the China National Intellectual Property Administration on January 20, 2022 and entitled "WIRELESS CHARGING TRANSMITTING TERMINAL, CHARGING BASE, AND SYSTEM", which is incorporated herein by reference in its entirety.

### TECHNICAL FIELD

This application relates to the field of wireless charging technologies for electronic devices, and in particular, to a wireless charging transmitting terminal, charging base, and system.

### BACKGROUND

A wireless charging technology (wireless charging technology, WCT), implements wireless transmission of electric energy by using a conductive medium such as an electric field, a magnetic field, a microwave, or a laser. Due to its advantages such as no wire restriction and no plugging, the wireless charging technology currently is more widely used in electronic devices. Currently, more electronic devices use wireless charging devices to perform wireless charging for the electronic devices. For example, the electronic device may be a mobile phone or a wearable device. The wireless charging device includes a transmitting coil, and the electronic device includes a receive coil. The wireless transmission of the electric energy is implemented between the transmitting coil and the receive coil through electromagnetic field coupling.

A principle of the wireless charging technology is to transmit electric energy through magnetic field coupling between a transmitting coil at a transmitting terminal and a receive coil at a receiving terminal. For example, for wireless charging of the mobile phone, the wireless charging device refers to a charging base, and the electronic device refers to the mobile phone. The transmitting coil is located in the charging base, and the receive coil is located inside the mobile phone. Currently, to meet a requirement of a customer, the wireless charging transmitting terminal includes a plurality of transmitting coils to meet charging requirements of a user in different scenarios. For example, one transmitting coil with highest charging efficiency may be selected from the plurality of transmitting coils based on charging efficiency to perform wireless charging. However, the charging base with the plurality of transmitting coils has problems of large conducted emission (CE, Conducted Emission) and large radiated emission (RE, Radiated Emission).

### SUMMARY

To resolve the foregoing problem, this application provides a wireless charging transmitting terminal, charging base, and system, so as to reduce super-conducted emission and radiated emission of the transmitting terminal.

According to a first aspect, this application provides a transmitting terminal, including an inverter circuit, n transmitting coils, a suppression circuit, and a controller, where n is an integer greater than or equal to 2; each of the n transmitting coils is connected to an output terminal of the inverter circuit; the inverter circuit is configured to convert a direct current into an alternating current and transmit the alternating current to at least one of the n transmitting coils, the at least one of the n transmitting coils works, and a remaining transmitting coil does not work; and the controller is configured to ground the non-working transmitting coil through the suppression circuit, to suppress a conducted emission and a radiated emission of the non-working transmitting coil. The suppression circuit is added to the transmitting terminal provided in this application to reduce the conducted emission and the radiated emission generated by the non-working transmitting coil. The controller controls the suppression circuit to implement grounding of the non-working transmitting coil, to transfer the conducted emission and the radiated emission of the non-working transmitting coil to the ground and reduce the conducted emission and the radiated emission generated by the non-working transmitting coil, thereby overall suppressing an interfering signal generated by the transmitting terminal.

The suppression circuit provided in this application may include a switch. To be specific, the switch is controlled to directly ground the non-working transmitting coil, to transfer the interfering signal to the ground. In addition, the suppression circuit may include a copper mesh. To be specific, the copper mesh may shield interfering signal radiation, to transfer the interfering signal to the ground. In addition, the suppression circuit may include a capacitor. The two terminals of the transmitting coil are grounded through the capacitor, to implement high-frequency grounding of the transmitting coil, thereby filtering out the interfering signal generated by the transmitting coil. These cases are separately described one by one in the following.

In a possible implementation, the suppression circuit includes n first switches, the n first switches are in a one-to-one correspondence with the n transmitting coils, and each of the n transmitting coils is grounded through a corresponding first switch; and
the controller is specifically configured to control a first switch corresponding to the non-working transmitting coil to turn on, and control a first switch corresponding to the working transmitting coil to turn off.

In a possible implementation, to reduce the interfering signal and ensure working efficiency of the transmitting terminal, the transmitting coil is prevented, as much as possible, from being directly grounded, but is grounded through a ground network. To be specific, the suppression circuit further includes ground networks, each of the n transmitting coils is grounded through the corresponding first switch and a corresponding ground network, and the ground network includes at least one of a capacitor or an inductor.

In a possible implementation, the ground network includes the inductor and the capacitor connected in series. To resolve interference and ensure working efficiency of the transmitting terminal, the transmitting terminal provided in this application includes the ground network. To be specific, the non-working transmitting coil is grounded through the inductor and the capacitor, in other words, ground impedance of the non-working transmitting coil is increased, to avoid energy wastes caused by transferring of excessive energy of the working transmitting coil to the ground. In a possible implementation, the transmitting terminal further includes n resonant networks, the n transmitting coils are in a one-to-one correspondence with the n resonant networks, and the resonant network includes at least a capacitor; and a resonant network corresponding to each of the n transmitting coils is connected between the output terminal of the inverter circuit and the transmitting coil.

In a possible implementation, a first terminal of the suppression circuit is connected between the transmitting coil and the resonant network, and a second terminal of the suppression circuit is grounded.

In a possible implementation, a first terminal of the suppression circuit is connected between the output terminal of the inverter circuit and the resonant network, and a second terminal of the suppression circuit is grounded.

In a possible implementation, the transmitting terminal further includes 2n second switches; each of the n transmitting coils corresponds to two switches in the 2n second switches; a first terminal of each transmitting coil is connected to a first output terminal of the inverter circuit through one of the two switches, and a second terminal of each transmitting coil is connected to a second output terminal of the inverter circuit through the other of the two switches; and the controller is further configured to control a second switch corresponding to the working transmitting coil to turn on, and control a second switch corresponding to the non-working transmitting coil to turn off.

In a possible implementation, the conducted emission or the radiated emission may be suppressed through grounding of at least one of the inductor or the capacitor. The following describes another implementation, that is, shielding the interfering signal by using a copper mesh. To be specific, the suppression circuit includes n copper meshes, the n transmitting coils are in a one-to-one correspondence with the n copper meshes, and the copper mesh covers a part or the whole of a corresponding transmitting coil; and the controller is configured to control a copper mesh of the non-working transmitting coil to be connected to the ground, and control a copper mesh of the working transmitting coil to be disconnected from the ground.

In a possible implementation, two terminals of the non-working transmitting coil are directly grounded through capacitors in another simplest manner, and no switch is needed for controlling, that is, grounding is implemented always through the capacitors. The suppression circuit includes 2n capacitors; each of the n transmitting coils corresponds to two capacitors in the 2n capacitors; and a first terminal of each transmitting coil is grounded through one of the two capacitors, and a second terminal of each transmitting coil is grounded through the other of the two capacitors. According to a second aspect, this application further provides a wireless charging base, configured to perform wireless charging for an electronic device, and including: a power interface, an inverter circuit, n transmitting coils, a controller, and a transmitting coil base plate, where n is an integer greater than or equal to 2; the power interface is configured to connect to a direct current transmitted by an adapter; the transmitting coil base plate is configured to place the n transmitting coils; each of the n transmitting coils is connected to an output terminal of the inverter circuit; the inverter circuit is configured to convert a direct current into an alternating current and transmit the alternating current to at least one of the n transmitting coils, the at least one of the n transmitting coils works, and a remaining transmitting coil does not work; and the controller is configured to ground the non-working transmitting coil through a suppression circuit, to suppress a conducted emission and a radiated emission of the non-working transmitting coil.

In a possible implementation, the suppression circuit includes n first switches, the n first switches are in a one-to-one correspondence with the n transmitting coils, and each of the n transmitting coils is grounded through a corresponding first switch; and the controller is specifically configured to control a first switch corresponding to the non-working transmitting coil to turn on, and control a first switch corresponding to the working transmitting coil to turn off.

In a possible implementation, the suppression circuit further includes ground networks, each of the n transmitting coils is grounded through the corresponding first switch and a corresponding ground network, and the ground network includes at least one of a capacitor or an inductor.

In a possible implementation, the ground network includes the inductor and the capacitor connected in series.

According to a third aspect, this application further provides a wireless charging system, including the transmitting terminal or the base described above, and further including an electronic device, where the transmitting terminal is configured to perform wireless charging for the electronic device. The technical solutions provided in this application have the following beneficial effects:
The wireless charging transmitting terminal provided in this application includes a plurality of transmitting coils. Although the non-working transmitting coil is not connected to the output terminal of the inverter circuit, there is also a coupling path, causing an interfering signal on a side of the inverter circuit to be transferred to the non-working transmitting coil. For example, interference is generated on a printed circuit board PCB of the transmitting terminal and a body diode of each switching transistor in the inverter circuit, leading to energy consumption on the non-working transmitting coil. The conducted emission and the radiated emission are also generated on the non-working transmitting coil. The suppression circuit is added to the transmitting terminal provided in this embodiment of this application to reduce the conducted emission and the radiated emission generated by the non-working transmitting coil. The controller controls the suppression circuit to implement grounding of the non-working transmitting coil, to transfer the conducted emission and the radiated emission of the non-working transmitting coil to the ground and reduce the conducted emission and the radiated emission generated by the non-working transmitting coil, thereby overall suppressing an interfering signal generated by the transmitting terminal.

### BRIEF DESCRIPTION OF DRAWINGS

FIG. 1 is a schematic diagram of a wireless charging system according to an embodiment of this application;
FIG. 2A is a diagram of a circuit of a wireless charging system;
FIG. 2B is a schematic diagram of a test at a wireless charging transmitting terminal according to an embodiment of this application;
FIG. 3 is a schematic diagram of a wireless charging transmitting terminal according to an embodiment of this application;
FIG. 4 is a schematic diagram of still another wireless charging transmitting terminal according to an embodiment of this application;
FIG. 5 is a schematic diagram of yet another wireless charging transmitting terminal according to an embodiment of this application;
FIG. 6A is a schematic diagram of direct grounding of a non-working transmitting coil according to an embodiment of this application;
FIG. 6B is a schematic diagram of another wireless charging transmitting terminal according to an embodiment of this application;
FIG. 6C is a schematic diagram of yet another wireless charging transmitting terminal according to an embodiment of this application;
FIG. 6D is a schematic diagram of another wireless charging transmitting terminal according to an embodiment of this application;
FIG. 7A is a schematic diagram of yet another wireless charging transmitting terminal according to an embodiment of this application;
FIG. 7B is a schematic diagram of grounding of a non-working transmitting coil through a capacitor according to an embodiment of this application;
FIG. 8A is a schematic diagram of still another transmitting terminal according to an embodiment of this application;
FIG. 8B is a schematic diagram of grounding of a non-working transmitting coil through a capacitor according to an embodiment of this application;
FIG. 9A is an equivalent schematic diagram of inductive coupling according to an embodiment of this application;
FIG. 9B is an equivalent schematic diagram of another type of inductive coupling according to an embodiment of this application; and
FIG. 10 is a schematic diagram of another transmitting terminal according to an embodiment of this application.

### DESCRIPTION OF EMBODIMENTS

To make persons skilled in the art more clearly understand the solutions of this application more clearly, application scenarios of the technical solutions of this application are first described below. A type of an electronic device is not specifically limited in embodiments of this application. The electronic device may be a mobile phone (mobile phone), a tablet computer (pad), a computer with a wireless transceiver function, an intelligent wearable product (for example, a smartwatch, a smart band, or a headset), a virtual reality (Virtual Reality, VR) terminal device, an augmented reality (Augmented Reality AR) terminal device, or the like that has a wireless device. The electronic device may alternatively be an electronic product such as a wireless charging electric vehicle, a wireless charging household appliance (for example, a soy milk maker or a sweeping robot), or an unmanned aerial vehicle.

To make persons skilled in the art better understand the technical solutions provided in the embodiments of this application, the following first describes an application scenario of wireless charging of the electronic device, and an example in which the electronic device is a mobile phone is used for description.

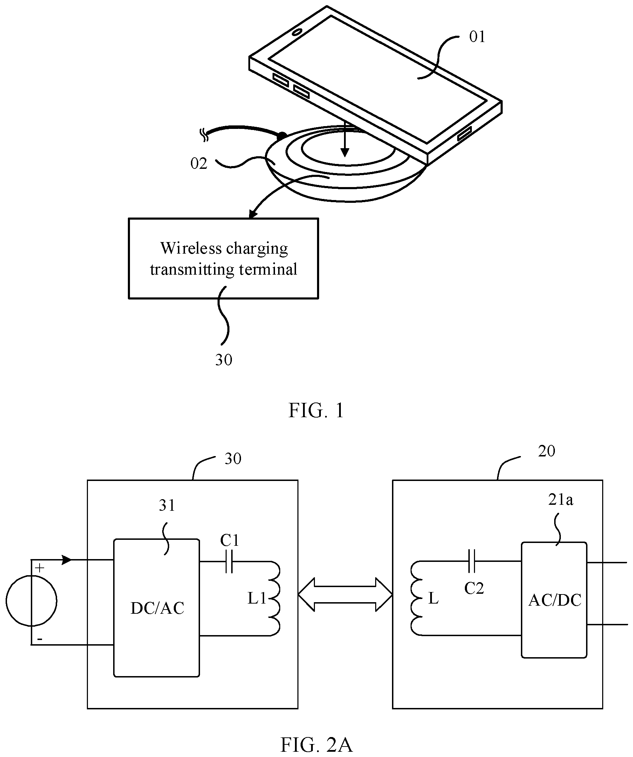

FIG. 1 is a schematic diagram of a wireless charging system according to an embodiment of this application.

When the electronic device is a mobile phone, a wireless charging device is a wireless charger 02. The wireless charger 02 is configured to perform wireless charging for an electronic device 01 (namely, the mobile phone), and the wireless charger 02 may also be referred to as a wireless charging base. The wireless charger 02 shown in the figure supports horizontal placement of the electronic device 01 above the wireless charger 02. In some embodiments, the wireless charger 02 may further have another form, for example, may be a vertical wireless charger having a specific degree of inclination, so that the electronic device 01 can lean against the wireless charger 02. The wireless charging system includes a wireless charging receiving (Receive, RX) terminal and a battery that are disposed in the electronic device 01, and the wireless charging receiving terminal is configured to charge the battery.

The wireless charging system further includes a wireless charging transmitting (Transmit, TX) terminal 30 disposed in the wireless charger 02, and an adapter coupled to the wireless charging transmitting terminal 30. The adapter is configured to provide charging electric energy, that is, the adapter may convert an alternating current power supply into a direct current and provide the direct current to the wireless charging transmitting terminal.

The wireless charging transmitting terminal 30 transmits power to the wireless charging receiving terminal. A control signal or charging data may be transmitted between the wireless charging transmitting terminal 30 and the wireless charging receiving terminal. The transmission of the control signal or the transmission of the charging data may be implemented through in-band communication, or may be implemented through out-of-band communication. A wireless connection is implemented between the wireless charging transmitting terminal 30 and the wireless charging receiving terminal 20 in an out-of-band communication manner such as Bluetooth (Bluetooth), wireless-fidelity (Wireless-Fidelity, WiFi), Zigbee (Zigbee), a radio frequency identification (Radio Frequency Identification, RFID) technology, a long range (Long range, Lora) wireless technology, or a near field communication (Near Field Communication, NFC) technology, so that wireless communication can be established between the wireless charging transmitting terminal 30 and the wireless charging receiving terminal 20.

The charging data may be used to indicate a charging type. In some embodiments, the charging data may be a charging protocol, for example, a wireless charging standard Qi released by a wireless power consortium (Wireless Power Consortium, WPC), for example, a BPP (Basic Power Profile) protocol or an EPP (Extended Power Profile) protocol.

The following describes a working principle of wireless charging with reference to the accompanying drawings.

FIG. 2A is a diagram of a circuit of a wireless charging system according to an embodiment of this application.

For ease of understanding and description, an example in which a transmitting terminal includes one transmitting coil is used in this embodiment for description.

A wireless charging transmitting apparatus 30 is configured to transmit magnetic field energy. The wireless charging transmitting apparatus 30 may be located in the wireless charging device.

The wireless charging transmitting apparatus 30 includes an inverter circuit DC/AC 31. An input terminal of the inverter circuit DC/AC 31 is configured to connect to a direct current power supply, for example, connect to a direct current output by the adapter. An output terminal of the inverter circuit DC/AC 31 is connected to a resonant network. The resonant network includes a resonant capacitor C1 and a transmitting coil L1.

In this embodiment of this application, for example, the resonant capacitor C1 and the transmitting coil L1 resonate in series.

A wireless charging receiving apparatus 20 is configured to receive the magnetic field energy transmitted by the wireless charging transmitting apparatus 30. The wireless charging receiving apparatus 20 may be located in the electronic device.

According to the wireless charging standard Qi, the in-band communication is recommended to transmit the control signal and the charging data, and the control signal is carried in transmission of wireless power. Therefore, a precondition for transmitting the control signal is that an alternating magnetic field generated by a current of the transmitting coil can establish a sufficient induced voltage on a receive coil to form power transmission. In a Qi protocol, after the wireless charging transmitting apparatus 30 identifies, in a Ping phase, a signal strength packet returned by the wireless charging receiving apparatus 20, the two successfully establish communication.

When wireless charging is performed between the wireless charging device and the electronic device, a wireless charging QI protocol is applicable. The QI protocol specifies that phases of wireless charging include the Ping phase (a before-ping phase), an identification and configuration phase, and a power transfer phase.

When the wireless charging device and the electronic device enter the ping phase, it indicates that the wireless charging device and the electronic device are located in a communicable area, that is, a before-ping area. When the wireless charging device and the electronic device are located in a non-communicable area, the wireless charging device and the electronic device do not enter the before-ping area, which is also referred to as entering a non-before-ping area, a non-power transmission area, or a non-signal strength packet detection area.

In the following embodiments, for ease of description, the before-ping area corresponds to the communicable area, and the non-before-ping area corresponds to the non-communicable area. The wireless charging receiving apparatus 20 includes a receive coil L, a capacitor C2, and a rectifier circuit AC/DC 21. The rectifier circuit AC/DC 21 converts an alternating current output by the receive coil L into a direct current to charge the battery.

After the wireless charging device converts input electric energy into magnetic field energy, the wireless charging device transmits the magnetic field energy by using the wireless charging transmitting apparatus 30. When the electronic device is located near the wireless charging device, the electronic device receives, by using the wireless charging receiving apparatus 20, the magnetic field energy emitted by the wireless charging device, and converts the magnetic field energy into the electric energy, to charge the electronic device. In this way, the electric energy is wirelessly transmitted from the wireless charging device to the electronic device.

Currently, some wireless charging transmitting terminal includes a plurality of transmitting coils, so that a degree of freedom of wireless charging of the electronic device can be increased. In this embodiment of this application, a specific quantity of transmitting coils is not specifically limited. For example, the transmitting terminal includes at least two transmitting coils, for example, may include three transmitting coils, four transmitting coils, or more transmitting coils. In an actual working process, one transmitting coil with highest charging efficiency in the plurality of transmitting coils may be selected to wirelessly charge the electronic device, and the other transmitting coil does not work. In addition, the transmitting terminal may also control the plurality of transmitting coils to simultaneously charge a plurality of receiving terminals. For example, the receiving terminals may include a mobile phone, a watch, a headset, and the like. However, the transmitting coil is an inductor element, the inverter circuit included in the transmitting terminal includes many switching transistors, and the switching transistor usually includes an anti-parallel body diode. All these are sources of conducted interference and radiated interference, and these interfering signals are transferred to the non-working transmitting coil. In addition, the plurality of transmitting coils each are disposed in a disk form, disks are staggered in physical space, and the transmitting coils overlap each other on a projection of a radial plane of the wireless charging base. Because the transmitting coils partially overlap each other, there is capacitive coupling between different transmitting coils, which also increases a propagation path of the interfering signal. With reference to the accompanying drawings, the following describes the path of the interfering signal existing at the transmitting terminals of the plurality of transmitting coils.

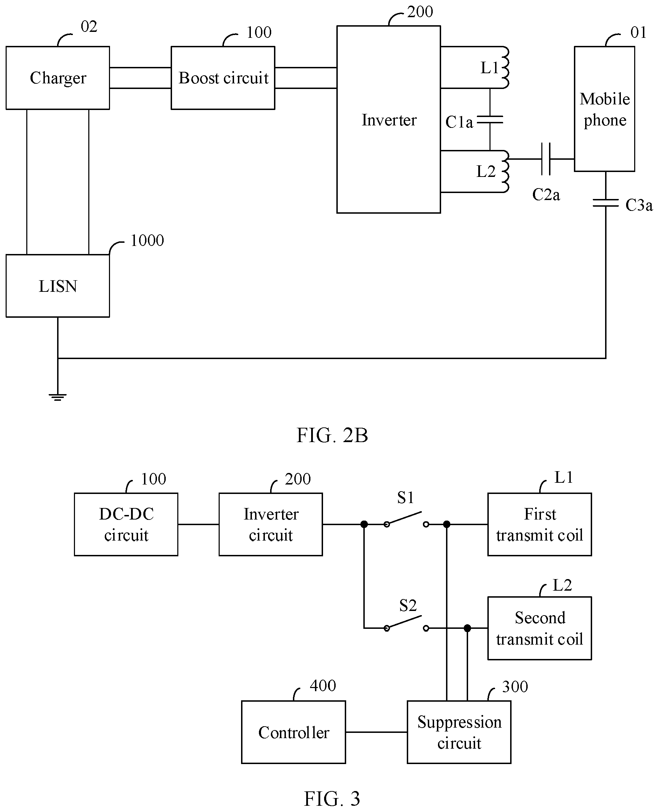

In an actual product, a line impedance stabilization network (LISN, Line Impedance Stabilization Network) test needs to be performed. FIG. 2B is a schematic diagram of a test at a wireless charging transmitting terminal according to an embodiment of this application.

When the charger 02 is connected to a Boost circuit 100, the charger 02 is also connected to an LISN 1000. In an actual test, a spectrum analyzer is needed to observe whether there is an interfering signal flowing through the LISN 1000. When the interfering signal flows through the LISN 1000, interference is caused to a mains supply.

In actual working, there is a distributed capacitor C1a between a first transmitting coil L1 and a second transmitting coil L2. When the first transmitting coil L1 works and the second transmitting coil L2 does not work, because there is a high-frequency interfering signal between L1 and L2, there is a distributed capacitor C2a between L2 and a mobile phone 01, and there is a distributed capacitor C3a between the mobile phone 01 and the ground, a capacitive interfering signal passes through C1a to L2, passes through C2a to the mobile phone 01, and passes through the distributed capacitor C3a to the ground. Therefore, the capacitive interfering signal is detected by the LISN 1000, which causes a problem in mobile phone testing.

The following describes in detail, with reference to the accompanying drawings, a wireless charging transmitting terminal provided in an embodiment of this application. The transmitting terminal includes a suppression circuit. Conducted interference and radiated interference of a non-working transmitting coil may be suppressed through the suppression circuit, that is, an interfering signal is prevented from being transferred from the non-working transmitting coil to the mobile phone. In other words, transferring of the interfering signal from the mobile phone to the ground is cut off, and is not detected by the LISN. Therefore, power consumption of the transmitting terminal can be reduced, and charging efficiency of the transmitting terminal can be improved. FIG. 3 is a schematic diagram of a wireless charging transmitting terminal according to an embodiment of this application.

The wireless charging transmitting terminal provided in this embodiment of this application includes an inverter circuit 200, n transmitting coils, a suppression circuit 300, and a controller 400, where n is an integer greater than or equal to 2. For ease of description and ease of understanding by persons skilled in the art, in this embodiment of this application, for example, n is 2, that is, two transmitting coils are used for description, namely, a first transmitting coil L1 and a second transmitting coil L2. In addition, n may be a larger integer, which is not specifically limited in this embodiment of this application.

Each of the n transmitting coils is connected to an output terminal of the inverter circuit 200. To be specific, the first transmitting coil L 1 is connected to the output terminal of the inverter circuit 200, and the second transmitting coil L2 is connected to the output terminal of the inverter circuit 200. In addition, a specific implementation form of the inverter circuit 200 is not specifically limited in this embodiment of this application, for example, may be a full bridge or a half bridge. In addition, the inverter circuit 200 may be a bidirectional power conversion circuit, which is not specifically limited.

The inverter circuit 200 is configured to convert a direct current into an alternating current and transmit the alternating current to at least one of the n transmitting coils. The at least one of the n transmitting coils works, and a remaining transmitting coil does not work. Generally, one transmitting coil works, and the other transmitting coil does not work, that is, only one transmitting coil transmits energy to a receiving terminal, that is, an electronic device side at a same time. For example, to control a connection between the transmitting coil and the output terminal of the inverter circuit 200, a switch may be correspondingly disposed on each transmitting coil. To be specific, the transmitting terminal further includes 2n second switches; each of the n transmitting coils corresponds to two switches in the 2n second switches; a first terminal of each transmitting coil is connected to a first output terminal of the inverter circuit through one of the two switches, and a second terminal of each transmitting coil is connected to a second output terminal of the inverter circuit through the other of the two switches; and the controller is further configured to control a second switch corresponding to the working transmitting coil to turn on, and control a second switch corresponding to the non-working transmitting coil to turn off. Each transmitting coil includes two terminals, and the two terminals of the transmitting coil are respectively connected to a positive output terminal and a negative output terminal of the inverter circuit 200. Therefore, each transmitting coil needs to correspond to two second switches. FIG. 3 is merely an example in which one transmitting coil corresponds to one switch.

Each transmitting coil is connected to the output terminal of the inverter circuit 200 through the corresponding switch. When the switch is turned on, the transmitting coil is connected to the inverter circuit 200. When the switch is turned off, the transmitting coil is disconnected from the inverter circuit 200. As shown in FIG. 3, the first transmitting coil L1 corresponds to one second switch S1, and the second transmitting coil L2 corresponds to the other second switch S2. The controller 400 controls S1 to turn on and controls S2 to turn off, that is, the output terminal of the inverter circuit 200 is connected to the first transmitting coil L1.

The controller 400 is configured to ground the non-working transmitting coil through the suppression circuit 300, to suppress a conducted emission and a radiated emission of the non-working transmitting coil.

Although the non-working transmitting coil is not connected to the output terminal of the inverter circuit 200, there is also a coupling path, causing an interfering signal on a side of the inverter circuit 200 to be transferred to the non-working transmitting coil. For example, interference is generated on a printed circuit board PCB of the transmitting terminal and a body diode of each switching transistor in the inverter circuit 200, leading to energy consumption on the non-working transmitting coil. The conducted emission and the radiated emission are also generated on the non-working transmitting coil. The suppression circuit 300 is added to the transmitting terminal provided in this embodiment of this application to reduce the conducted emission and the radiated emission generated by the non-working transmitting coil. The controller 400 controls the suppression circuit 300 to implement grounding of the non-working transmitting coil, to transfer the conducted emission and the radiated emission of the non-working transmitting coil to the ground and reduce the conducted emission and the radiated emission generated by the non-working transmitting coil, thereby overall suppressing an interfering signal generated by the transmitting terminal.

The suppression circuit provided in this embodiment of this application may include a switch. To be specific, the switch is controlled to directly ground the non-working transmitting coil, to transfer the interfering signal to the ground. In addition, the suppression circuit may include a copper mesh. To be specific, the copper mesh may shield interfering signal radiation, to transfer the interfering signal to the ground. In addition, the suppression circuit may include a capacitor. The two terminals of the transmitting coil are grounded through the capacitor, to implement high-frequency grounding of the transmitting coil, thereby filtering out the interfering signal generated by the transmitting coil.

The following describes a specific implementation of a transmitting terminal with reference to the accompanying drawings.

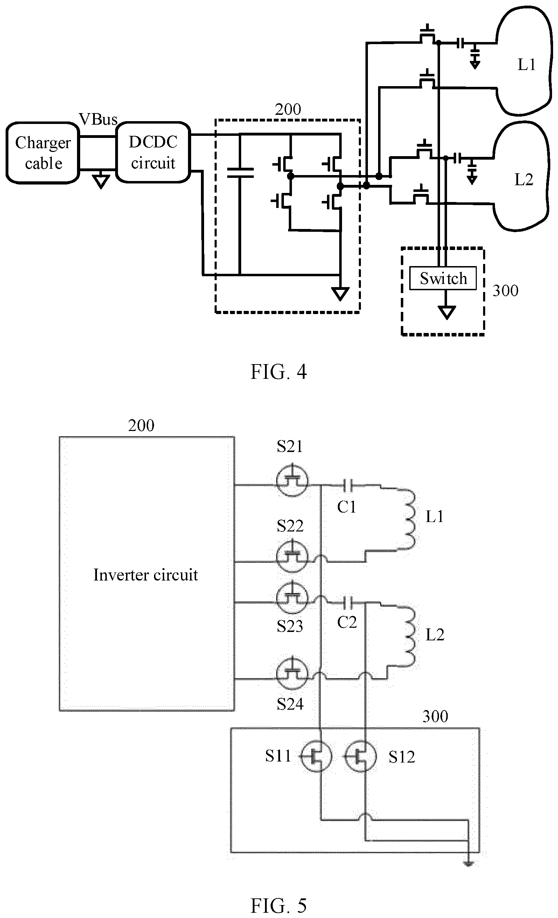

FIG. 4 is a schematic diagram of yet another wireless charging transmitting terminal according to an embodiment of this application.

The transmitting terminal provided in this embodiment continues to be described by using two transmitting coils L1 and L2 as an example. A first terminal of L1 is grounded through a switch in the suppression circuit 300, and a first terminal of L2 is also grounded through the switch in the suppression circuit 300.

The transmitting terminal provided in this embodiment of this application further includes a DCDC circuit. For example, the DCDC circuit may be a boost circuit, and the boost circuit may be implemented by a Boost circuit.

The inverter circuit 200 may be a full-bridge inverter circuit, that is, include four switching transistors.

The transmitting terminal provided in this embodiment of this application may be a wireless charging base. The base needs to be connected to a charger through a charger cable, and the charger converts an alternating current into a direct current. Therefore, a current transmitted on the charger cable is the direct current. The charger cable is connected to the DCDC circuit through a direct current bus VBus, an output terminal of the DCDC circuit is connected to an input terminal of the inverter circuit 200, and the output terminal of the inverter circuit 200 is connected to each transmitting coil through a switch.

The following first describes, with reference to the accompanying drawings, a specific implementation of the switch included in the suppression circuit in the wireless charging transmitting terminal provided in this application.

FIG. 5 is a schematic diagram of still another wireless charging transmitting terminal according to an embodiment of this application.

The suppression circuit of the wireless charging transmitting terminal provided in this embodiment includes n first switches, the n first switches are in a one-to-one correspondence with the n transmitting coils, and each of the n transmitting coils is grounded through a corresponding first switch. In this embodiment, two switches continue to be used as an example for description. A first terminal of the first transmitting coil L1 is grounded through one first switch S11, and a first terminal of the second transmitting coil L2 is grounded through the other first switch S 12.

The controller (not shown in the figure) is specifically configured to control a first switch corresponding to the non-working transmitting coil to turn on, and control a first switch corresponding to the working transmitting coil to turn off. For example, when the first transmitting coil L1 works and the second transmitting coil L2 does not work, the controller may control the first switch S11 corresponding to the first transmitting coil L1 to turn off, and control the first switch S12 corresponding to the second transmitting coil L2 to turn on, that is, to be grounded. In this way, a conducted emission and a radiated emission generated by the second transmitting coil L2 are transferred to the ground, and do not affect the first transmitting coil L1 and the receiving terminal.

It should be noted that each switching transistor in embodiments of this application may be a MOS transistor, or may be an IGBT transistor, or may be a semiconductor switch device in another form. This is not specifically limited in embodiments of this application.

In addition, it can be seen from FIG. 5 that each transmitting coil corresponds to two second switches, and the first transmitting coil L1 corresponds to second switches S21 and S22. The first terminal of the first transmitting coil L1 is connected to the positive output terminal of the inverter circuit 200 through S21, and the second terminal of the first transmitting coil L1 is connected to the negative output terminal of the inverter circuit 200 through S22. The first terminal of the second transmitting coil L2 is connected to the positive output terminal of the inverter circuit 200 through S23, and a second terminal of the second transmitting coil L2 is connected to the negative output terminal of the inverter circuit 200 through S24.

In addition, the transmitting terminal provided in this embodiment of this application further includes n resonant networks, and the n transmitting coils are in a one-to-one correspondence with the n resonant networks.

A resonant network corresponding to each of the n transmitting coils is connected between the output terminal of the inverter circuit and the transmitting coil.

In this embodiment of this application, an example in which the resonant network includes one capacitor is used for description. In addition, a specific implementation form of the resonant network is not specifically limited in this application. For example, the resonant network includes a capacitor and an inductor, or may include only a capacitor. There may be one or more capacitors. When the resonant network includes an inductor, there may be one or more inductors.

As shown in FIG. 5, the first transmitting coil L1 corresponds to a resonant network C1, and the second transmitting coil L2 corresponds to a resonant network C2. A specific location at which the suppression circuit 300 is connected is not specifically limited in this embodiment of this application. In FIG. 5, a first terminal of the suppression circuit 300 is connected between the second switch and the resonant network, and a second terminal of the suppression circuit 300 is grounded. In another possible implementation, the first terminal of the suppression circuit 300 may be connected between the resonant network and the transmitting coil.

For the transmitting terminal described in the foregoing embodiments, the non-working transmitting coil is directly grounded. To reduce the interfering signal and ensure working efficiency of the transmitting terminal, the transmitting coil is prevented, as much as possible, from being directly grounded, but is grounded through a ground network.

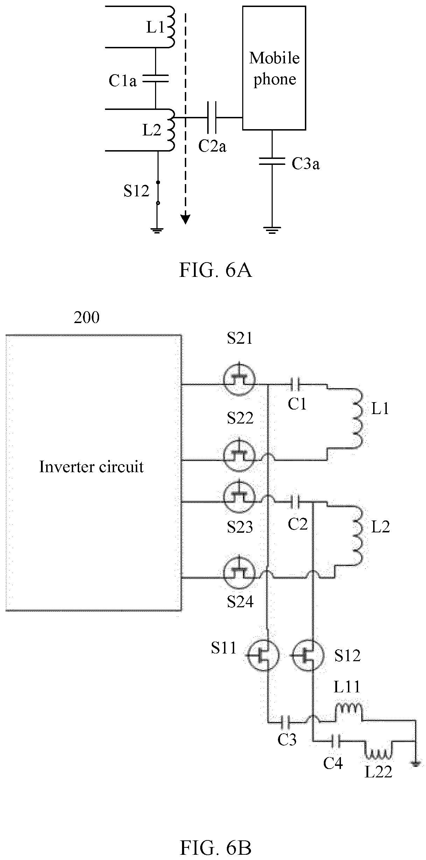

FIG. 6A is a schematic diagram of direct grounding of a non-working transmitting coil according to an embodiment of this application.

It can be seen from FIG. 6A that, when the non-working transmitting coil L2 is grounded through the switch S12, in this case, S12 is turned on, and the interfering signal is directly transmitted to the ground through L2 and S12, instead of being transferred to a mobile phone through C2a and then transferred to the ground through a distributed capacitor C3a between the mobile phone and the ground.

Although the technical solution shown in FIG. 6A can reduce the interfering signal, excessive energy of L1 may be transferred to the ground through L2, which causes electric energy wastes.

To resolve interference and ensure working efficiency of the transmitting terminal, the transmitting terminal provided in this embodiment of this application includes the ground network. To be specific, the non-working transmitting coil is grounded through the ground network, in other words, ground impedance of the non-working transmitting coil is increased, to avoid energy wastes caused by transferring of excessive energy of the working transmitting coil to the ground.

The suppression circuit in the transmitting terminal provided in this embodiment of this application includes the switch, and the transmitting coil may be grounded through the switch in the suppression circuit. The controller only needs to control an action of the switch, to implement grounding of the non-working transmitting coil and disconnecting of the working transmitting coil from the ground, so that the conducted emission and the radiated emission generated by the non-working transmitting coil can be transferred to the ground, thereby suppressing the interfering signal generated by the non-working transmitting coil, and improving wireless charging efficiency of the transmitting terminal.

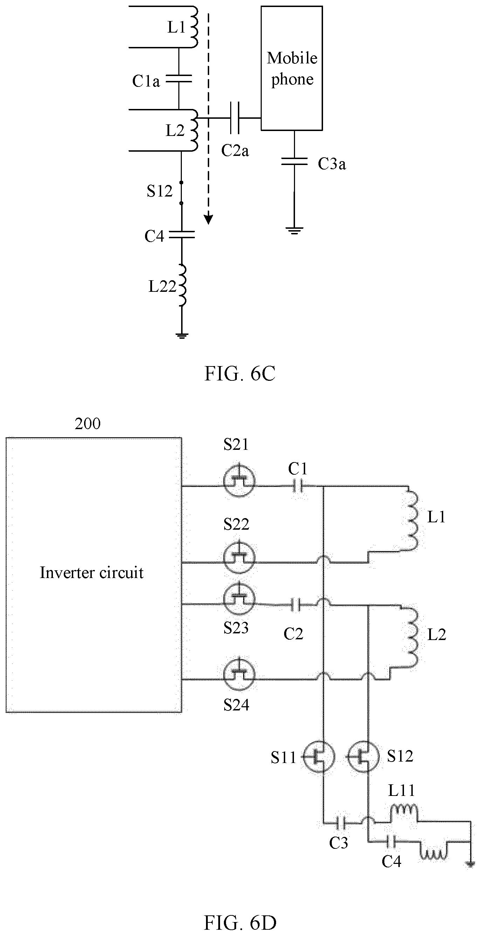

The following describes the suppression circuit provided in this embodiment of this application, which further includes the ground network in addition to the switch. Detailed description is provided below with reference to the accompanying drawings. FIG. 6B and FIG. 6C are schematic diagrams of yet another wireless charging transmitting terminal according to an embodiment of this application.

The suppression circuit in the transmitting terminal provided in this embodiment of this application further includes ground networks. Each transmitting coil corresponds to one ground network, that is, a quantity of the ground networks is the same as a quantity of the transmitting coils.

Each of the n transmitting coils is grounded through the corresponding first switch and a corresponding ground network, and the ground network includes at least one of a capacitor or an inductor. In a possible implementation, the ground network may include only a capacitor, or may include only an inductor. Furthermore, in addition to a capacitor, the ground network may further include another circuit element, for example, an inductor.

In FIG. 6B and FIG. 6C, an example in which the ground network includes an inductor and a capacitor is used for description. That is, the ground network includes the inductor and the capacitor connected in series. In FIG. 6B, an example in which L1 is used as the working transmitting coil and L2 is used as the non-working transmitting coil is used for description. FIG. 6B is a schematic diagram of a specific implementation solution, and FIG. 6C is merely an equivalent circuit diagram.

The following describes a specific implementation of the ground network with reference to FIG. 6B.

A ground network corresponding to the first transmitting coil L1 includes a capacitor C3 and an inductor L11 connected in series. To be specific, a first terminal of the first transmitting coil L1 is grounded through the first switch S11, the capacitor C3, and the inductor L11 that are connected in series, and a first terminal of the second transmitting coil L2 is grounded through the first switch S12, a capacitor C4, and an inductor L22 that are connected in series.

It can be seen from FIG. 6C that L2 is not directly grounded, but is grounded through the capacitor C4 and the inductor L22 connected in series. Because C4 and L22 increase ground impedance of L2, no energy waste is caused by transferring of excessive energy of L1 to the ground through L2. Therefore, working efficiency can be ensured while interference is reduced.

According to the transmitting terminal provided in this embodiment of this application, the suppression circuit includes the capacitor and the inductor connected in series, to reduce power consumption generated by the suppression circuit and improve working efficiency of the transmitting terminal. In addition, to minimize power consumption, the capacitor and the inductor connected in series can form series resonance. Specific quantities and a connection manner of the capacitor and the inductor are not specifically limited in this embodiment of this application. For example, the capacitor and the inductor may alternatively form parallel resonance.

In the embodiments corresponding to FIG. 5 and FIG. 6B, the suppression circuit is connected between the resonant network and the inverter circuit. To be specific, a first terminal of the suppression circuit is connected between the output terminal of the inverter circuit and the resonant network, and a second terminal of the suppression circuit is grounded. In the following description, a first terminal of the suppression circuit is connected between the resonant network and the transmitting coil, and a second terminal of the suppression circuit is grounded.

FIG. 6D is a schematic diagram of another wireless charging transmitting terminal according to an embodiment of this application.

By comparing FIG. 6B with FIG. 6D, it can be seen that only locations at which C1 and C2 are connected to the suppression circuit change.

A first terminal of the first transmitting coil L1 is grounded through the first switch S11, the capacitor C3, and the inductor L11 that are connected in series, and a first terminal of the second transmitting coil L2 is grounded through the first switch S12, a capacitor C4, and an inductor L22 that are connected in series. For example, when L1 works, L2 does not work. In this case, S12 is turned on and S11 is turned off. The conducted emission and the radiated emission on the non-working L2 are transferred to the ground through C4 and L22 connected in series, thereby reducing impact of the interfering signal on L1 and the receiving terminal, reducing power consumption, and improving charging efficiency of the transmitting terminal.

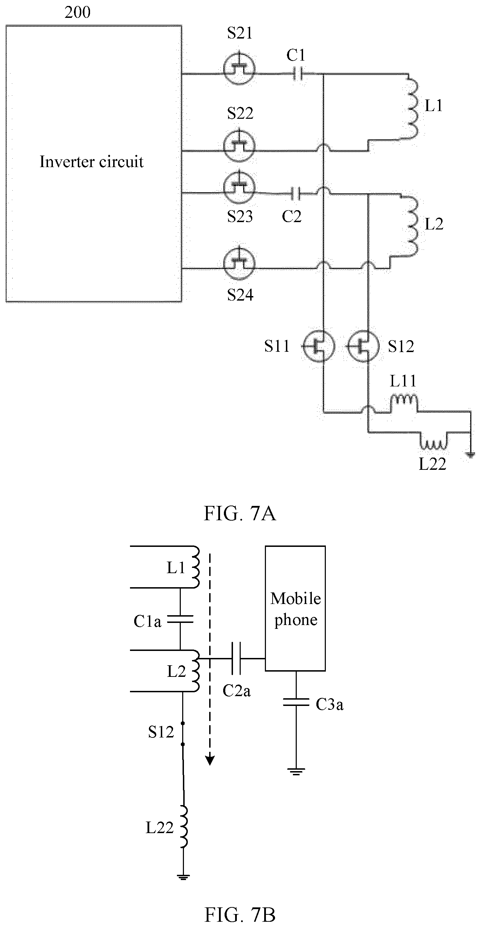

The ground network in FIG. 6C and FIG. 6D includes the capacitor and the inductor connected in series. The following describes another implementation in which the ground network includes only an inductor. FIG. 7A is a schematic diagram of another transmitting terminal according to an embodiment of this application.

The ground network in the suppression circuit in the transmitting terminal provided in this embodiment includes only an inductor. To be specific, a first terminal of the first transmitting coil L1 is grounded through the first switch S11 and the inductor L11, and a first terminal of the second transmitting coil L2 is grounded through the first switch S12 and an inductor L22.

FIG. 7B is a schematic diagram of grounding of a non-working transmitting coil through a capacitor according to an embodiment of this application.

The first transmitting coil L1 works, the second transmitting coil L2 does not work, and L2 is grounded through the inductor L22. Because the inductor L22 is added, ground impedance of L2 is increased, thereby preventing excessive energy of L1 from being transferred to the ground through L2.

The ground network in FIG. 6C and FIG. 6D includes the capacitor and the inductor connected in series. The following describes another implementation in which the ground network includes only a capacitor.

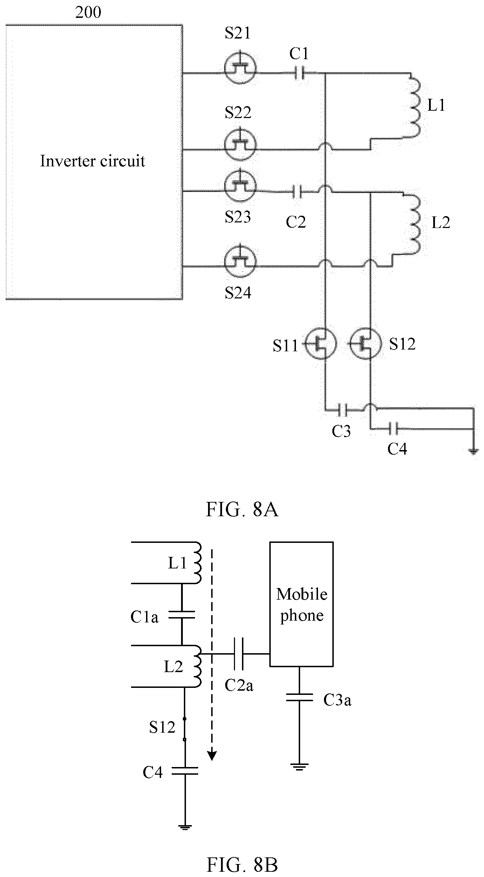

FIG. 8A is a schematic diagram of still another transmitting terminal according to an embodiment of this application. The ground network in the suppression circuit in the transmitting terminal provided in this embodiment includes only a capacitor. To be specific, a first terminal of the first transmitting coil L1 is grounded through the first switch S11 and the capacitor C3, and a first terminal of the second transmitting coil L2 is grounded through the first switch S12 and a capacitor C4.

When the ground network includes only the capacitor, in comparison with a case in which the non-working transmitting coil is directly grounded, ground impedance of the non-working transmitting coil may also be increased, to avoid energy wastes caused by transferring of excessive energy of the working transmitting coil to the ground. Therefore, interference resistance can be ensured, and high working efficiency can be ensured as much as possible.

FIG. 8B is a schematic diagram of grounding of a non-working transmitting coil through a capacitor according to an embodiment of this application.

The first transmitting coil L1 works, the second transmitting coil L2 does not work, and L2 is grounded through the capacitor C4. Because the capacitor C4 is added, ground impedance of L2 is increased, thereby preventing excessive energy of L1 from being transferred to the ground through L2.

The embodiments described above describe a case in which there is capacitive coupling interference between the first transmitting coil and the second transmitting coil. The following describes a case in which there is inductive coupling interference between the first transmitting coil and the second transmitting coil. Because there is mutual inductance M between the first transmitting coil L1 and the second transmitting coil L2, there is also inductive coupling between the first transmitting coil L1 and the second transmitting coil L2.

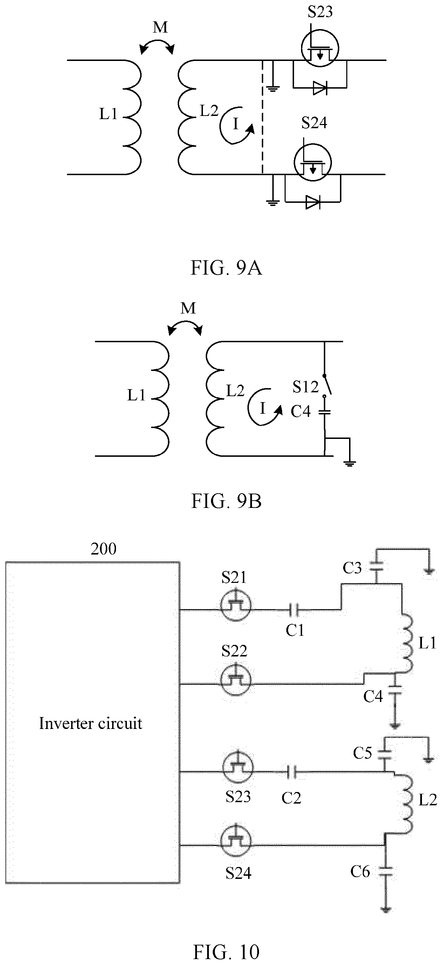

The following describes, with reference to FIG. 8A and FIG. 9A, the case in which there is the inductive coupling interference between the first transmitting coil and the second transmitting coil.

FIG. 9A is an equivalent schematic diagram of inductive coupling according to an embodiment of this application.

That the first transmitting coil L1 works and the second transmitting coil L2 does not work is still used as an example. Because there is the mutual inductance M between L1 and L2, energy of L1 may be transferred to L2.

If neither of two terminals of L2 is grounded, an induced current I coupled from L1 to L2 forms no closed loop at the two terminals of L2. Because body diodes of a switch S23 and a switch S24 are in opposite directions, I forms no closed loop path. However, to reduce transferring of the interfering signal to the mobile phone, when the two terminals of L2 are directly grounded, the coupled current I is short-circuited by grounding to form a closed loop. In addition, in an actual product, L2 has a capacitor connected in series, and the capacitor is configured to adjust a waveform. In this case, I is consumed in the inductor and the capacitor connected in series, which causes energy losses.

Therefore, to reduce the consumed energy of the current I in the closed loop, a magnitude of the current I should be reduced. Therefore, in this application, from a perspective of inductive coupling, to reduce power consumption, the non-working transmitting coil can be grounded through the ground network instead of being directly grounded.

FIG. 9B is an equivalent schematic diagram of another type of inductive coupling according to an embodiment of this application.

In FIG. 9B, for example, the ground network includes a capacitor. To be specific, L2 does not work, and a first terminal of L2 is grounded through the switch S12 and a capacitor C4 connected in series. In an actual product, a second terminal of L2 may also be grounded through a switch. That is, the two terminals of L2 may be both grounded. In this embodiment, only the ground network is added, and the ground network includes the capacitor. In this case, ground impedance of L2 can be increased, so that a magnitude of I is reduced and power consumption is reduced.

In addition, in the foregoing description, the ground network corresponding to L2 may be grounded through the inductor and the capacitor connected in series, as shown in FIG. 6B. In addition, the ground network may also include an inductor. Details are not described herein again.

In this embodiment of this application, whether the inductor and the capacitor connected in series form resonance is not specifically limited. When the resonance is formed, a resonance frequency may be suppressed.

A function of the capacitor in the ground network is to perform high frequency filtering on the interfering signal, and a function of the inductor in the ground network is to perform low frequency filtering on the interfering signal.

In addition, an embodiment of this application further provides an implementation, in which the suppression circuit includes no switch but includes only a capacitor, and two terminals of the non-working transmitting coil are directly grounded through the capacitor, which is described in detail below with reference to the accompanying drawings.

FIG. 10 is a schematic diagram of another transmitting terminal according to an embodiment of this application.

The suppression circuit in the transmitting terminal provided in this embodiment includes 2n capacitors.

Each of the n transmitting coils corresponds to two capacitors in the 2n capacitors, that is, each transmitting coil corresponds to two capacitors. A first terminal of each transmitting coil is grounded through one of the two capacitors, and a second terminal of each transmitting coil is grounded through the other of the two capacitors, that is, the two terminals of each transmitting coil are separately grounded through one capacitor.

As shown in FIG. 10, a first terminal of the first transmitting coil L1 is grounded through a capacitor C3, and a second terminal of the first transmitting coil L 1 is grounded through a capacitor C4. A first terminal of the second transmitting coil L2 is grounded through a capacitor C5, and a second terminal of the second transmitting coil L2 is grounded through a capacitor C6. According to the wireless charging transmitting terminal provided in this embodiment, the suppression circuit includes the capacitor, the two terminals of each transmitting coil are separately grounded through one capacitor, and the non-working transmitting coil is grounded through the capacitors, so that high-frequency grounding can be implemented to filter out the interfering signal. In comparison with the suppression circuit including the switch, this solution is simpler, and no switch action needs to be controlled by the controller, thereby reducing a burden of the controller. In addition, an embodiment of this application further provides another wireless charging transmitting terminal. The suppression circuit may be implemented by using a copper mesh. To be specific, the copper mesh is used to cover the transmitting coil, to shield the interfering signal generated by the non-working transmitting coil, and transmit the interfering signal to the ground. Specifically, the suppression circuit provided in this embodiment of this application includes n copper meshes. The n transmitting coils are in a one-to-one correspondence with the n copper meshes. The copper mesh covers a part or the whole of a corresponding transmitting coil. To be specific, the copper mesh may cover only a part of the transmitting coil, or may cover all of the transmitting coil, and one transmitting coil corresponds to at least one copper mesh.

The controller is configured to control a copper mesh of the non-working transmitting coil to be connected to the ground, and control a copper mesh of the working transmitting coil to be disconnected from the ground.

### Charging base embodiment

Based on the wireless charging transmitting terminal provided in the foregoing embodiments, an embodiment of this application further provides a wireless charging base, and reference may be still made to the wireless charging base 02 shown in FIG. 1. The wireless charging base is configured to perform wireless charging for an electronic device, and includes a power interface, an inverter circuit, n transmitting coils, a controller, and a transmitting coil base plate, where n is an integer greater than or equal to 2.

The power interface is configured to connect to a direct current transmitted by an adapter.

The transmitting coil base plate is configured to place the n transmitting coils.

Each of the n transmitting coils is connected to an output terminal of the inverter circuit.

The inverter circuit is configured to convert a direct current into an alternating current and transmit the alternating current to at least one of the n transmitting coils, the at least one of the n transmitting coils works, and a remaining transmitting coil does not work.

The controller is configured to ground the non-working transmitting coil through a suppression circuit, to suppress a conducted emission and a radiated emission of the non-working transmitting coil.

Although the non-working transmitting coil is not connected to the output terminal of the inverter circuit, there is also a coupling path, causing an interfering signal on a side of the inverter circuit to be transferred to the non-working transmitting coil. For example, interference is generated on a printed circuit board PCB of the transmitting terminal and a body diode of each switching transistor in the inverter circuit, leading to energy consumption on the non-working transmitting coil. The conducted emission and the radiated emission are also generated on the non-working transmitting coil. The suppression circuit is added to the transmitting terminal provided in this embodiment of this application to reduce the conducted emission and the radiated emission generated by the non-working transmitting coil. The controller controls the suppression circuit to implement grounding of the non-working transmitting coil, to transfer the conducted emission and the radiated emission of the non-working transmitting coil to the ground and reduce the conducted emission and the radiated emission generated by the non-working transmitting coil, thereby overall suppressing an interfering signal generated by the transmitting terminal.

The suppression circuit provided in this embodiment of this application may include a switch. To be specific, the switch is controlled to directly ground the non-working transmitting coil, to transfer the interfering signal to the ground. In addition, the suppression circuit may include a copper mesh. To be specific, the copper mesh may shield interfering signal radiation, to transfer the interfering signal to the ground. In addition, the suppression circuit may include a capacitor. The two terminals of the transmitting coil are grounded through the capacitor, to implement high-frequency grounding of the transmitting coil, thereby filtering out the interfering signal generated by the transmitting coil.

According to the wireless charging base provided in this embodiment of this application, the suppression circuit includes n first switches, the n first switches are in a one-to-one correspondence with the n transmitting coils, and each of the n transmitting coils is grounded through a corresponding first switch; and
the controller is specifically configured to control a first switch corresponding to the non-working transmitting coil to turn on, and control a first switch corresponding to the working transmitting coil to turn off.

In addition, the suppression circuit further includes ground networks, each of the n transmitting coils is grounded through the corresponding first switch and a corresponding ground network, and the ground network includes at least one of a capacitor or an inductor.

In another possible implementation, the ground network includes the inductor and the capacitor connected in series.

### Wireless charging system embodiment

Based on the wireless charging transmitting terminal provided in the foregoing embodiments, an embodiment of this application further provides a wireless charging system, including the transmitting terminal described in the foregoing embodiments, and further including an electronic device, where the transmitting terminal is configured to perform wireless charging for the electronic device.

A specific form of the electronic device is not specifically limited in this embodiment of this application. For example, the electronic device may be a mobile phone. The transmitting terminal provided in this embodiment of this application is configured to perform wireless charging for the mobile phone. Currently, to improve a degree of freedom of wireless charging, the transmitting terminal includes a plurality of transmitting coils. During actual working, one transmitting coil with highest charging efficiency is selected from the plurality of transmitting coils to charge the mobile phone. However, interfering signals such as a conducted emission and a radiated emission are generated on a remaining non-working transmitting coil. In a solution provided in this embodiment of this application, the interfering signal may be suppressed by using a suppression circuit, to reduce power consumption of the transmitting terminal, and improve wireless charging efficiency.

It should be understood that, in this application, "at least one" refers to one or more, and "a plurality of" refers to two or more. The term "and/or" is used for describing an association between associated objects and representing that three associations may exist. For example, "A and/or B" may indicate that only A exists, only B exists, and both A and B exist, where A and B may be singular or plural. The character "/" generally indicates an "or" relationship between associated objects. "At least one of the following" or a similar expression thereof refers to any combination of these items, including one item or any combination of a plurality of items. For example, at least one of a, b, or c may represent a, b, c, "a and b", "a and c", "b and c", or "a, b, and c", where a, b, and c may be singular or plural.

As described above, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of the embodiments of this application.

## Claims

1. A wireless charging transmitting terminal, comprising an inverter circuit, n transmitting coils, a suppression circuit, and a controller, wherein n is an integer greater than or equal to 2;
each of the n transmitting coils is connected to an output terminal of the inverter circuit;
the inverter circuit is configured to convert a direct current into an alternating current and transmit the alternating current to at least one of the n transmitting coils, the at least one of the n transmitting coils works, and a remaining transmitting coil does not work; and
the controller is configured to ground the non-working transmitting coil through the suppression circuit, to suppress a conducted emission and a radiated emission of the non-working transmitting coil.

2. The transmitting terminal according to claim 1, wherein the suppression circuit comprises n first switches, the n first switches are in a one-to-one correspondence with the n transmitting coils, and each of the n transmitting coils is grounded through a corresponding first switch; and
the controller is specifically configured to control a first switch corresponding to the non-working transmitting coil to turn on, and control a first switch corresponding to the working transmitting coil to turn off.

3. The transmitting terminal according to claim 2, wherein the suppression circuit further comprises ground networks, each of the n transmitting coils is grounded through the corresponding first switch and a corresponding ground network, and the ground network comprises at least one of a capacitor or an inductor.

4. The transmitting terminal according to claim 3, wherein the ground network comprises the inductor and the capacitor connected in series.

5. The transmitting terminal according to any one of claims 2-4, wherein the transmitting terminal further comprises n resonant networks, the n transmitting coils are in a one-to-one correspondence with the n resonant networks, and the resonant network comprises at least a capacitor; and
a resonant network corresponding to each of the n transmitting coils is connected between the output terminal of the inverter circuit and the transmitting coil.

6. The transmitting terminal according to claim 5, wherein a first terminal of the suppression circuit is connected between the transmitting coil and the resonant network, and a second terminal of the suppression circuit is grounded.

7. The transmitting terminal according to claim 5, wherein a first terminal of the suppression circuit is connected between the output terminal of the inverter circuit and the resonant network, and a second terminal of the suppression circuit is grounded.

8. The transmitting terminal according to any one of claims 1-7, wherein the transmitting terminal further comprises 2n second switches;
each of the n transmitting coils corresponds to two switches in the 2n second switches;
a first terminal of each transmitting coil is connected to a first output terminal of the inverter circuit through one of the two switches, and a second terminal of each transmitting coil is connected to a second output terminal of the inverter circuit through the other of the two switches; and
the controller is further configured to control a second switch corresponding to the working transmitting coil to turn on, and control a second switch corresponding to the non-working transmitting coil to turn off.

9. The transmitting terminal according to claim 1, wherein the suppression circuit comprises n copper meshes, the n transmitting coils are in a one-to-one correspondence with the n copper meshes, and the copper mesh covers a part or the whole of a corresponding transmitting coil; and
the controller is configured to control a copper mesh of the non-working transmitting coil to be connected to the ground, and control a copper mesh of the working transmitting coil to be disconnected from the ground.

10. The transmitting terminal according to claim 1, wherein the suppression circuit comprises 2n capacitors;
each of the n transmitting coils corresponds to two capacitors in the 2n capacitors; and
a first terminal of each transmitting coil is grounded through one of the two capacitors, and a second terminal of each transmitting coil is grounded through the other of the two capacitors.

11. A wireless charging base, configured to perform wireless charging for an electronic device, and comprising: a power interface, an inverter circuit, n transmitting coils, a controller, and a transmitting coil base plate, wherein n is an integer greater than or equal to 2;
the power interface is configured to connect to a direct current transmitted by an adapter;
the transmitting coil base plate is configured to place the n transmitting coils;
each of the n transmitting coils is connected to an output terminal of the inverter circuit;
the inverter circuit is configured to convert a direct current into an alternating current and transmit the alternating current to at least one of the n transmitting coils, the at least one of the n transmitting coils works, and a remaining transmitting coil does not work; and
the controller is configured to ground the non-working transmitting coil through the suppression circuit, to suppress a conducted emission and a radiated emission of the non-working transmitting coil.

12. The base according to claim 11, wherein the suppression circuit comprises n first switches, the n first switches are in a one-to-one correspondence with the n transmitting coils, and each of the n transmitting coils is grounded through a corresponding first switch; and
the controller is specifically configured to control a first switch corresponding to the non-working transmitting coil to turn on, and control a first switch corresponding to the working transmitting coil to turn off.

13. The base according to claim 12, wherein the suppression circuit further comprises ground networks, each of the n transmitting coils is grounded through the corresponding first switch and a corresponding ground network, and the ground network comprises at least one of a capacitor or an inductor.

14. The base according to claim 13, wherein the ground network comprises the inductor and the capacitor connected in series.

15. A wireless charging system, comprising the transmitting terminal according to any one of claims 1-10 or the base according to any one of claims 11-14, and further comprising an electronic device, wherein
the transmitting terminal is configured to perform wireless charging for the electronic device.

16. A wireless charging transmitting terminal, comprising an inverter circuit, n transmitting coils, a suppression circuit, and a controller, wherein n is an integer greater than or equal to 2;
each of the n transmitting coils is connected to an output terminal of the inverter circuit;
the inverter circuit is configured to convert a direct current into an alternating current and transmit the alternating current to at least one of the n transmitting coils, the at least one of the n transmitting coils works, and a remaining transmitting coil does not work; and
the controller is configured to ground the non-working transmitting coil through the suppression circuit, to suppress a conducted emission and a radiated emission of the non-working transmitting coil.

17. The transmitting terminal according to claim 16, wherein the suppression circuit comprises n first switches, the n first switches are in a one-to-one correspondence with the n transmitting coils, and each of the n transmitting coils is grounded through a corresponding first switch; and
the controller is specifically configured to control a first switch corresponding to the non-working transmitting coil to turn on, and control a first switch corresponding to the working transmitting coil to turn off.

18. The transmitting terminal according to claim 17, wherein the suppression circuit further comprises ground networks, each of the n transmitting coils is grounded through the corresponding first switch and a corresponding ground network, and the ground network comprises at least one of a capacitor or an inductor.

19. The transmitting terminal according to claim 18, wherein the ground network comprises the inductor and the capacitor connected in series.

20. The transmitting terminal according to any one of claims 17-19, wherein the transmitting terminal further comprises n resonant networks, the n transmitting coils are in a one-to-one correspondence with the n resonant networks, and the resonant network comprises at least a capacitor; and
a resonant network corresponding to each of the n transmitting coils is connected between the output terminal of the inverter circuit and the transmitting coil.

21. The transmitting terminal according to claim 20, wherein a first terminal of the suppression circuit is connected between the transmitting coil and the resonant network, and a second terminal of the suppression circuit is grounded.

22. The transmitting terminal according to claim 20, wherein a first terminal of the suppression circuit is connected between the output terminal of the inverter circuit and the resonant network, and a second terminal of the suppression circuit is grounded.

23. The transmitting terminal according to claim 16, wherein the transmitting terminal further comprises 2n second switches;
each of the n transmitting coils corresponds to two switches in the 2n second switches;
a first terminal of each transmitting coil is connected to a first output terminal of the inverter circuit through one of the two switches, and a second terminal of each transmitting coil is connected to a second output terminal of the inverter circuit through the other of the two switches; and
the controller is further configured to control a second switch corresponding to the working transmitting coil to turn on, and control a second switch corresponding to the non-working transmitting coil to turn off.

24. The transmitting terminal according to claim 16, wherein the suppression circuit comprises n copper meshes, the n transmitting coils are in a one-to-one correspondence with the n copper meshes, and the copper mesh covers a part or the whole of a corresponding transmitting coil; and
the controller is configured to control a copper mesh of the non-working transmitting coil to be connected to the ground, and control a copper mesh of the working transmitting coil to be disconnected from the ground.

25. The transmitting terminal according to claim 16, wherein the suppression circuit comprises 2n capacitors;
each of the n transmitting coils corresponds to two capacitors in the 2n capacitors; and
a first terminal of each transmitting coil is grounded through one of the two capacitors, and a second terminal of each transmitting coil is grounded through the other of the two capacitors.
